# EUROPÄISCHE PATENTANMELDUNG

(11) **EP 1 513 329 A1**
(43) Veröffentlichungstag der Anmeldung: **09.03.2005**
(21) Anmeldenummer: 03019923.6
(22) Anmeldetag: 02.09.2003
(51) Int. Cl.: H04M 1/725

(54) **Mobiles Endgerät mit orts- und/oder zeitabhängiger Menüstruktur**

(71) Anmelder: SIEMENS AKTIENGESELLSCHAFT, 80333 München (DE)
(72) Erfinder: Hülskemper, Michael, 46569 Hünxe (DE)

(57) **Zusammenfassung**

Mobiles Endgerät (MOT) eines Telekommunikationsnetzes, mit einer Ein/Ausgabe (EAE) und konfigurierbaren Parametern, z.B. Eingabeelementen (A, B, ..., H) in einem Untermenü. Eine zeitund/oder ortsabhängige Funktionszuordnung (PRV, UPR) enthält eine änderbare - insbesondere vom Benutzer einstellbare - Zuordnung eines oder mehrerer Parameterwerte, z.B. Funktionen des Endgeräts, zu den Parametern, sowie eine zeit- und/oder ortsbezogenen Bedingung, nach der die Parameter mit stets höchstens einer der so zugeordneten Parameterwerte in Abhängigkeit von der Zeit und/oder dem Aufenthaltsort belegt ist.

## Beschreibung

Die Erfindung betrifft ein mobiles Endgerät eines Telekommunikationsnetzes, mit einer Ein/Ausgabeeinrichtung zur Entgegennahme von Befehlen eines Benutzer und mit einer Anzahl von konfigurierbaren Parametern, die jeweils eine Betriebseigenschaft des Endgeräts betreffen.

Mobile Kommunikationsendgeräte entwickeln sich immer weiter zu Multifunktionsgeräten, in denen neben der Grundfunktion des Telefons zusätzliche Aufgaben wie Adress-, Termin- und Datenverwaltung vorgesehen sind. Der große Umfang an Funktionalitäten spiegelt sich in einer komplexen Bedienstruktur, die inzwischen zu einem häufig entscheidenden Faktor bei der Auswahl eines Endgeräts geworden ist. Zudem ist oft eine individuelle Abstimmung auf die persönlichen Bedürfnisse des Benutzers - sogenannte "Personalisierung" - von besonderer Bedeutung für den (subjektiven oder objektiven) Nutzen der Verwendung des Geräts.

Die Belegung von bestimmten Tasten oder Eingabefeldern (einschließlich sogenannter "Softkeys") mit häufig verwendeten Funktionen, z.B. der Wahl einer Telefonnummer oder dem Aufruf einer Terminverwaltung, ist bekannt. In modernen Geräten kann auch die Menüstruktur in gewissen Grenzen durch Erstellen eines "Benutzermenüs" personalisiert werden, worin die häufigsten Funktionen zusammen gefasst werden können. Diese Benutzer-spezifischen Anpassungen sind jedoch statisch und können sich nicht an z.B. den typischen Tagesablauf des Benutzers anpassen.

Es ist Aufgabe der Erfindung, einen Weg zur flexibleren Personalisierung der Menüstruktur bzw. Belegung von Eingabeelementen zu schaffen, die insbesondere den nach Tageszeit und/oder Aufenthaltsort eines Benutzers sich wandelnden Bedürfnissen entgegenkommt. Hierbei ist unter Eingabeelement jegliche Möglichkeit der Oberfläche des Endgeräts zum Aufruf einer Endgeräte-Funktion zu verstehen, wie z.B. Tasten, Eingabefelder, Softkeys oder Menüpunkte (gleich ob diese manuell, akustisch oder auf andere Weise aktiviert werden).

Diese Aufgabe wird von einem Endgerät der eingangs genannten Art gelöst, welches erfindungsgemäß Mittel zum Bestimmen von Information betreffend die aktuelle Zeit und/oder des Aufenthaltsorts des Endgeräts aufweist, wobei für zumindest einen Parameter eine zeit- und/oder ortsabhängigen Funktionszuordnung vorgesehen ist, welche eine veränderliche Zuordnung einer oder mehrerer Parameterwerte zu dem zumindest einen Parameter definiert, sowie eine zeit- und/oder ortsbezogene Bedingung, nach der der bzw. die Parameter mit stets höchstens einem der so zugeordneten Parameterwerten in Abhängigkeit von der Zeit und/oder dem Aufenthaltsort belegt ist.

Die erfindungsgemäße Lösung erlaubt eine weitgehende Anpassung der Menüstruktur an die speziellen Bedürfnisse eines Benutzers, vor allem hinsichtlich seines Tagesablaufs. Damit wird eine effektive Personalisierung der Bedienung des Endgeräts ermöglicht.

In einer bevorzugten Weiterbildung der Erfindung sind die konfigurierbaren Parameter von dem Benutzer einstellbar, und neben den erwähnten Mitteln zum Bestimmen von Information betreffend die aktuelle Zeit und/oder des Aufenthaltsorts des Endgeräts ist für zumindest einen Parameter eine zeitund/oder ortsabhängige Funktionszuordnung vorgesehen, welche eine in Abhängigkeit von Befehlen des Benutzers einstellbare Zuordnung einer oder mehrerer Parameterwerte zu dem zumindest einen Parameter enthält, sowie eine zeit- und/oder ortsbezogene Bedingung, nach der der bzw. die Parameter mit stets höchstens einem der so zugeordneten Parameterwerten in Abhängigkeit von der Zeit und/oder dem Aufenthaltsort belegt ist.

Eine besonders bevorzugte Ausführungsform der Erfindung betrifft ein Endgerät mit zumindest einem Eingabeelement, das mit einer vom Benutzer wählbaren Funktion des Endgeräts belegbar ist. Diese Eingabeelemente werden erfindungsgemäß als Parameter behandelt, und es ist - neben den erwähnten Mitteln zum Bestimmen von Information betreffend die aktuelle Zeit und/oder des Aufenthaltsorts des Endgeräts - für zumindest ein Eingabeelement eine zeit- und/oder ortsabhängige Funktionszuordnung vorgesehen, welche eine in Abhängigkeit von Befehlen des Benutzers einstellbare Zuordnung einer oder mehrerer Funktionen des Endgeräts als Parameterwert(e) zu dem zumindest einen Eingabeelement enthält, sowie eine zeitund/oder ortsbezogene Bedingung, nach der das Eingabeelement bzw. die Eingabeelemente mit stets höchstens einem der so zugeordneten Parameterwerte in Abhängigkeit von der Zeit und/oder dem Aufenthaltsort belegt ist.

Besonders eignet sich für die Realisierung der Erfindung eine konfigurierbare Menüführung mit einer Anzahl von Eingabeelementen, wobei in der konfigurierbaren Menüführung die zeitund/oder ortsabhängigen Funktionszuordnung für zumindest eines der Eingabeelemente vorgesehen ist. Dabei kann die konfigurierbare Menüführung einen Benutzer-konfigurierbaren Bereich, z.B. ein Untermenü, aufweisen, in dem Eingabeelemente für eine zeit- und/oder ortsabhängige Funktionszuordnung vorgesehen sind.

In einer bevorzugten Ausführungsform der Erfindung ist das Endgerät dazu eingerichtet, zum Bestimmen der Aufenthaltsort-Information Informationen hinsichtlich der Funkzelle und/oder Basisstation des Mobilfunknetzes, in deren Einzugsbereich sich das Endgerät aufhält, abzufragen und auszuwerten.

Eine besonders übersichtlich programmierbare Weise, die erfindungsgemäße zeit- und/oder ortsabhängige Funktionszuordnung zu realisieren, besteht darin, dass sie in einer Tabelle kodiert ist, die zumindest eine zeit- und/oder ortsbezogene Bedingung mit jeweils zumindest einer Zuordnung eines Parameterwertes zu einem Parameter bzw. einer Funktion zu einem Eingabeelement aufweist, wobei bei Zutreffen der Bedingung bzw. einer dieser Bedingungen die Belegung von Parameterwerten gemäß den dieser zutreffenden Bedingung zugehörenden Zuordnungen bestimmt ist. Eine andere Möglichkeit sieht vor, dass zumindest einem Parameter bzw. Eingabeelement jeweils zumindest eine spezifische Vorschrift zugeordnet ist, die eine zeit- und/oder ortsbezogene Bedingung mit zumindest einem Parameterwert (z.B. eine Funktion des Endgeräts) verknüpft.

Um eine dynamische Priorisierung von Belegungen zu erreichen, ist es vorteilhaft, wenn die Zuordnung von Parameterwerten zu Parametern unter Verwendung von Prioritätswerten erfolgt, welche nach einer zeit- und/oder ortsbezogenen Bedingung berechnet werden. Dabei kann eine Anzahl von Parametern mit jeweils jenen Parameterwerten belegt werden, für die die höchsten Prioritätswerte gemäß der zeit- und/oder ortsbezogenen Bedingung berechnet wurden.

Die Erfindung samt weiterer Vorzüge wird im Folgenden anhand eines nicht einschränkenden Ausführungsbeispiels näher erläutert, das in den beigefügten Zeichnungen dargestellt ist. Die Zeichnungen zeigen in schematischer Form:
- Fig. 1: ein Blockdiagramm eines Mobiltelefons nach dem Ausführungsbeispiel;
- Fig. 2: das Mobiltelefon der Fig. 1 mit einem nach der Erfindung Benutzer-konfigurierbaren Bereich.

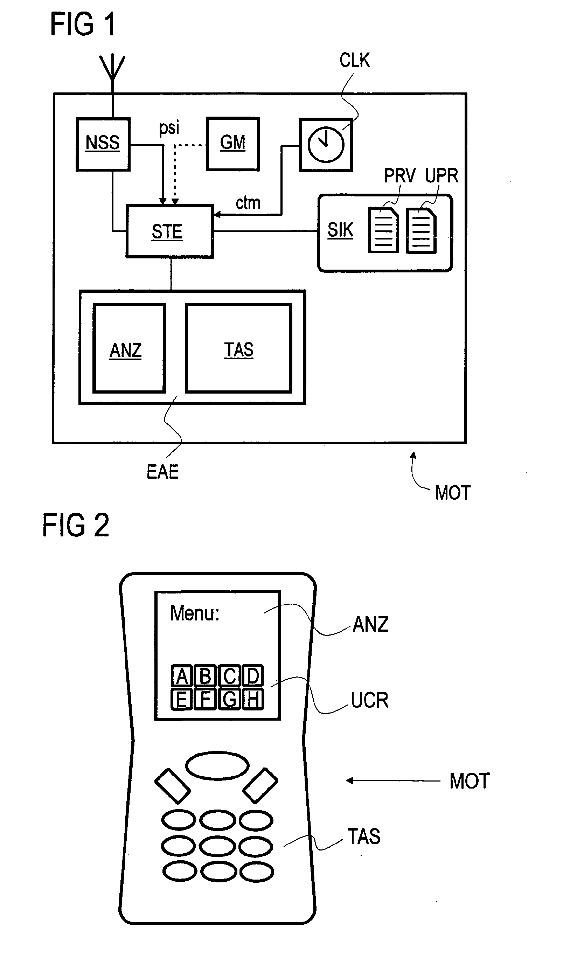

In Fig. 1 ist ein Mobiltelefon MOT gezeigt, das über eine Tastatur TAS und eine Touchscreen-Anzeige ANZ bedienbar ist. Das Mobiltelefon wird mithilfe einer Menüsteuerung bedient, wobei die verschiedenen Ebenen und Teilmenüs nach bekannter Art auf der Anzeige ANZ dargestellt werden. Neben der der Anzeige ANZ und der Tastatur TAS, die hier zusammen die Ein/Ausgabe EAE darstellen, hat das Mobiltelefon MOT des weiteren eine Netzschnittstelle NSS, Steuereinheit STE mit Arbeitsspeicher MEM und einem Dauerspeicher z.B. in Form einer SIM-Karte SIK nach an sich bekannter Art.

Fig. 2 zeigt einen vom Benutzer im Rahmen der Menüsteuerung aufrufbaren Benutzer-konfigurierbaren Bereich UCR, in dem z.B. acht Softkey-Felder A, B, C, ..., H vorgesehen sind. Dem Benutzer-konfigurierbaren Bereich UCR ist eine programmierbare Vorschrift PRV zugeordnet, die im dem Mobiltelefon MOT zugeordneten Dauerspeicher SIK gehalten wird. Wenn der Benutzer des Mobilgeräts MOT einen der Softkeys A bis H (durch Berühren des zugeordneten Feldes auf der Anzeige ANZ) aktiviert, ermittelt die Steuereinheit, welche Funktion diesem Softkey zugeordnet ist und ruft die so bestimmte Funktion auf.

Die Vorschrift PRV verknüpft gemäß der Erfindung eine (oder mehrere) zeit- und/oder ortsabhängige Vorschrift(en) mit den Belegungen der Softkeys A-H mit Funktionen des Endgeräts. Selbstverständlich könnten in einer Variante auch andere Eingabeelemente, wie z.B. hierfür umkonfigurierbare oder eigens vorgesehene Tasten der Tastatur TAS, nach der Erfindung belegbar sein. Die hierfür erforderliche Information hinsichtlich der aktuellen Zeit und des Aufenthaltsorts kann die Steuereinheit STE von entsprechenden hierfür vorgesehenen Mitteln abfragen.

Für die Uhrzeit ctm wird beispielsweise die Uhr CLK verwendet, die nach bekannter Art in Mobilgeräten üblich ist. Die Aufenthaltsinformation psi wird in dem gezeigten Beispiel von der Netzschnittstelleneinrichtung NSS geliefert, nämlich in Form einer Spezifikation der Netzzelle oder Basisstation des Mobilfunknetzes, in dessen Aufenthaltsbereich sich das Mobilgerät befindet. Ebenso wären auch andere Einrichtungen zur Bestimmung der aktuellen Position, z.B. ein GPRS-Modul GM, denkbar.

Die Vorschrift PRV ist in dem gezeigten einfachen Ausführungsbeispiel in Textform gehalten und kann von dem Benutzer bei Bedarf geändert werden, beispielsweise mittels eines im Mobiltelefon integrierten Texteditors bekannter Art, mit dem auch z.B. Kurznachrichten verfasst werden können. In aufwendigeren Varianten können die Einträge auch über eine eigene Menüsteuerung erzeugt werden. Tabelle 1 (am Ende dieser Beschreibung) zeigt ein Beispiel einer solchen programmierbaren Vorschrift PRV.

Die Vorschrift der Tabelle 1 ist in Abschnitte gegliedert, die jeweils einer zeit- und/oder ortsabhängigen Bedingung zugeordnet sind. Die Definition der Bedingung wird durch das Schlüsselwort "Condition:" eingeleitet, worauf eine oder mehrere Belegungsdefinitionen für Softkeyfelder A-H folgen. Beispielsweise legt die erste Bedingung in Tabelle 1 eine Gültigkeit im Ortsbereich "Office" und in der Zeit von Montag bis Freitag zwischen 8 und 17 Uhr fest; die darauf folgenden fünf Belegungsdefinitionen gelten somit nur wenn diese örtlich/zeitliche Bedingung erfüllt ist.

Jede Belegungsdefinition erfüllt das Format "X = Funktion", wobei X für den Buchstaben A bis H eines der Softkeyfelder steht, sowie Funktion für eine auf dem Mobilgerät aufrufbare Funktion, z.B. den Aufruf eines Telefonbuchs, einer Kalender-Funktion, eines Anwendungsprogramms (z.B. Outlook) usw. Insbesondere ist natürlich die Funktion der Anrufdurchführung möglich, beispielsweise mittels des Schlüsselworts "Anruf", gefolgt von einer Rufnummer, die direkt (Rufnummer) oder symbolisch - z.B. mit einer Referenz auf einen Telefonbuch-Eintrag - angegeben sein kann. Analog können andere Netzfunktionen, wie z.B. ein WAP-Abruf gestaltet sein.

Die verschiedenen orts/zeitabhängigen Bedingungen werden nacheinander abgearbeitet, bis die erste zutreffende Bedingung gefunden wird. Die Bedingungen entsprechen in de Regel typischen Situationen des Benutzers: Beispielsweise entspricht die erste Bedingung dem Arbeitsplatz, die zweite Bedingung bezieht sich auf einen regelmäßiges Treffen mit einem Freund zum Kinobesuch, usw.

Eine zutreffende Bedingung überdeckt gegebenenfalls in nachfolgenden Abschnitten vorhandene Definitionen; z.B. überdeckt die Definition für den Softkey H im zweiten Abschnitt jene des dritten Abschnitts, sofern sich das Mobilgerät Freitags zwischen 16 und 20 Uhr im "Home"-Bereich aufhält. Die Bedingung des letzten Abschnitts "Default" ist stets erfüllt; die dort definierten Belegungen gelten somit stets, sofern sie nicht durch eine vorhergehende überdeckt sind.

In dem gezeigten Beispiel ist dem Softkey F keine Funktion zugeordnet, ebenso dem Softkey G in den Zeiten außerhalb Freitags von 16 bis 20 Uhr oder außerhalb des "Home"-Bereichs. Dann sind diese Eingabeelemente mit keiner Funktion belegt; ein Aktivieren (Aufruf) dieser Elemente wird von der Steuereinheit STE ignoriert oder dadurch dem Benutzer quittiert, dass eine Warnmeldung (z.B. "Dieses Element ist nicht belegt.") ausgegeben wird.

Die Ortsbereiche sind symbolisch definiert. Beispielsweise ist dem Namen "Office" ein Bereich des Mobilfunknetzes zugeordnet, an das das Mobilgerät MOT angeschlossen ist, nämlich in dem Beispiel jene Mobilfunkzellen oder Basisstationen des betreffenden Mobilfunknetzes, die das Gebiet des Arbeitsplatzes des Benutzers versorgen. Entsprechend ist dem in der zweiten Bedingung verwendeten Bereich "Home" jene Mobilfunkzelle bzw. Basisstation zugeordnet, in deren Einzugsbereich sich die Wohnung des Benutzers befindet. Die Definition der Bereiche geschieht in dem gezeigten Beispiel mittels eines symbolischen Namens (z.B. "Home") und einer Aufzählung der zugeordneten Mobilfunkzellen bzw. Basisstationen (z.B. in Form der netzspezifischen Zellencodes) und wird z.B. in einem getrennten Konfigurationseintrag in einem hierfür vorgesehenen Menüeintrag (nicht gezeigt) festgelegt.

In einer Variante können die Ortsbereiche auch mithilfe einer postalischen Adresse, z.B. unter Verwendung einer Postleitzahl, definiert werden. In diesem Fall ermittelt das Gerät über ein Zelleninformationssystem die zu einer postalischen Adresse zugehörenden Netzzellen.

Tabelle 2 zeigt eine andere Möglichkeit der Kodierung der personalisierten Belegung der Softkeys; der Übersichtlichkeit halber sind nur die Definitionen für die Softkeys A bis D gezeigt, die inhaltlich denen der Tabelle 1 entsprechen. In diesem Fall ist die Kodierung nach den Elementen geordnet, und für jedes Element ist jeweils eine Zeit/Ortsbedingung einer Funktion zugeordnet, wobei für jedes Element jeweils die erste zutreffende Bedingung jene Funktion definiert, welche aktuelle Belegung des Elements darstellt.

In Tabelle 2 ist außerdem die Möglichkeit gezeigt, den einzelnen Softkeys A bis H Symbole zuzuweisen. Diese erscheinen dann anstelle des jeweiligen Softkeysymbols in der Anzeige ANZ, wenn die jeweils zugeordnete Bedingung erfüllt ist, also der Softkey mit der zugeordnete Funktion tatsächlich gerade belegt ist. In den Definitionen der Tabelle 2 ist jeweils der Dateiname des Symbols nach dem Schlüsselwort "Symbol" angegeben, oder ein Text, falls dieser anstelle eines Symbols erscheinen soll.

Die Information der Tabelle 2 ist z.B. als Datei in Textform abgespeichert; ebenso könnten die einzelnen Zuordnungen jeweils für sich abgespeichert sein, z.B. in Form jeweils eines Konfigurationseintrags für jedes konfigurierte Eingabeelement.

In dem gezeigten Ausführungsbeispiel sind die nach der Erfindung einstellbaren Eingabeelemente auf der gleichen Ebene in der Menühierarchie angeordnet. Selbstverständlich können auch Eingabeelemente auf verschiedenen Menüebenen der Menühierarchie nach der hier beschriebenen Weise belegt werden. Insbesondere ist es denkbar, dass eine Funktion verschiedenen Eingabeelementen auf verschieden "hohen" Menüebenen zugewiesen wird; auf diese Weise kann das Wechseln einer Funktion zwischen einer "hohen", leicht erreichbaren Menüebene und einer weniger "hohen", nämlich über ein oder mehrere Zwischenmenüs erreichbaren, Menüebene realisiert werden.

Durch den Benutzer kann auch z.B. die Belegung eines Soft-Keys durch Dritte freigegeben werden, wobei eine Belegung mit einem orst/zeitspezifisch Sonderdienst wie z.B. Informationsschaltungen od.dgl. dem Benutzer zur Verfügung gestellt werden. Dies geschieht z.B. durch den Eintrag "H = Network(Time, Location)" in Tabelle 1, durch den der Softkey H für die Belegung mit einer Funktion durch den Netzwerkbetreiber freigegeben wird.

Nach der Erfindung können auch andere Betriebsparameter als Eingabeelemente zeit- und ortsabhängig konfiguriert werden. Dies ist in den Tabellen 1 und 2 am Beispiel des Klingeltons des Mobilgeräts dargestellt. Der Parameter Klingelton wird beispielsweise durch ein Schlüsselwort "ring" eingeleitet, dem auf die bereits beschriebene Weise Parameterwerte zugeordnet werden können, in dem gezeigten Beispiel das Rufzeichen "Bell01" wenn sich der Benutzer an seinem Arbeitsplatz befindet, sonst das Rufzeichen "Tune03". Natürlich können auch andere Benutzer-konfigurierbare Betriebsparameter auf diese Weise zeit/ortsabhängig eingestellt werden.

In einer Variante des Ausführungsbeispiels kann die orts/zeitabhänigige Belegung von Betriebsparametern, insbesondere Eingabeelementen, dynamisch verwaltet werden. Dies geschieht beispielsweise durch Erfassung wichtiger Funktionen des Mobiltelefons MOT in einer zusätzlichen tabellarischen Prötokolldatei UPR. Wenn vom Benutzer eine in der Datei UPR genannten Funktionen verwendet wird, so werden die Daten dieses Aufrufs darin gespeichert, sowie ein Zähler inkrementiert. In dem gezeigten Beispiel wird zu der aufgerufenen Funktion ein neuer Eintrag generiert, in dem Datum, Uhrzeit und Ort angegeben sind. Die Einträge werden beispielsweise über einen Zeitraum von 14 Tagen protokolliert (ältere Einträge werden gestrichen und der zugehörende Zähler entsprechend verringert). Ein beispielhafter Auszug der Datei UPR ist in Tabelle 3 gezeigt, wobei für drei Funktionen (Terminkalender sowie Anruf zweier Rufnummern) jeweils die ersten drei Einträge gezeigt sind. Die erste Zeile ist ein Kommentar, in dem die Bedeutung der einzelnen Teile der Einträge deklariert ist.

Aus den Einträgen zu einer Funktion wird eine dynamische Priorisierung abgeleitet, sodass beispielsweise ein Funktionsaufruf, der jeden Tag zur selben Uhrzeit erfolgt, zu dieser Uhrzeit eine hohe Priorität erhält. Entsprechendes gilt für den Ortsbezug. Für jede in der Datei UPR genannte Funktion wird die Priorität z.B. wie folgt berechnet: Für jeden Eintrag wird eine Beitragszahl B bestimmt, die sich aus dem Produkt eines Ortsfaktors F und eines Zeitfaktors Z bestimmt. Der Ortsfaktor ist B = 2, wenn der aktuelle Aufenthaltsort des Mobiltelefons MOT mit dem im Eintrag genannten Bereich (z.B. "Office") übereinstimmt, sonst B = 1. Der Zeitfaktor Z ist eine Funktion der Differenz der aktuellen Uhrzeit t mit der im Eintrag genannten Uhrzeit tₑ des Funktionsaufrufs, beispielsweise die Dreiecksfunktion D( (t-tₑ)/T_{D} ) , wobei D(x) = |1-x| für |x|≤1 und D(x) = 0 sonst (also wenn |x|>1); T_{D} definiert die Breite des Dreiecksbereichs, z.B.
T_{D} = 120 min. Die Beitragszahlen sämtlicher Einträge zu einer Funktion werden addiert, und die so erhaltene Zahl P = Σ B = Σ F·Z wird als Priorität verwendet, wobei eine große Zahl eine hohe Priorität kennzeichnet. Selbstverständlich können in anderen Realisierungen der Erfindung auch andere Werte als die hier angegebenen verwendet werden, auch die für den Zeitfaktor verwendete Form kann eine andere geeignete Funktion als die Dreiecksfunktion sein, z.B. eine Stufenfunktion oder Gauss-Funktion. Auch könnte der Ortsfaktor als Funktion einer Entfernung formuliert werden.

Auf diese Weise werden den in der Datei UPR erfassten Funktionen anhand der zeit- und Ortsinformation Prioritätswerte zugewiesen. Stehen dem Gerät, wie im hier betrachteten Beispiel (Fig. 2) acht konfigurierbare Soft-keys zur Verfügung, werden die acht Einträge in der Datei UPR mit der höchsten Priorität für die Belegung der acht Soft-Keys verwendet. Falls gewünscht, kann die Datei vom Benutzer z.B. über einen Editor verändert werden, beispielsweise dadurch, dass er den Prioritätseintrage einer oder mehrerer Funktionen manuell auf einen sehr hohen (wichtige Funktionalität) oder nidrigen Wert (unwichtige Funktionalität) einstellt.

**Tabelle 1**

| |
|---|
| Condition: Location = Office AND Time = Mo-Fr/8:00-17:00 |
| A = Telefonbuch "Business" |
| B = Kalender |
| C = Anruf Sekretariat |
| D = Outlook Quick Sync |
| E = Neu Dokument |
| ring = "Bell01" |
| |
| Condition: Location = Home AND Time = Fr/16:00-20:00 |
| G = WAP "Cinema Ticket Service" |
| H = Anruf E.Freund |
| |
| Condition: Time = So-Do/20:00-23:00 |
| H = Set Alarm |
| |
| Condition: Default |
| A = Telefonbuch |
| B = Countdown |
| C = MP3 |
| D = Spiele |
| E = Anruf +4317654321 |
| H = Network(Time, Location) |
| ring = "Tune03" |

**Tabelle 2**

| A: | |
|---|---|
| Location = Office AND Time = Mo-Fr/8:00-17:00 | |
| Telefonbuch "Business" | [Symbol Phonebook2] |
| Default | |
| Telefonbuch | [Symbol Phonebook1] |
| | |

| B: | |
|---|---|
| Location = Office AND Time = Mo-Fr/8:00-17:00 | |
| Kalender | [Symbol Calendar] |
| Default | |
| Countdown | ["1"] |
| | |

| C: | |
|---|---|
| Location = Office AND Time = Mo-Fr/8:00-17:00 | |
| Anruf Sekretariat | [Symbol Peg] |
| Default | |
| MP3 | [Symbol Musical] |
| | |

| D: | |
|---|---|
| Location = Office AND Time = Mo-Fr/8:00-17:00 | |
| Outlook Quick Sync | ["Q"] |
| Default | |
| Spiele | [Symbol Calendar] |
| | |
| ... | |
| | |
| ring: | |
| Location = Office AND Time = Mo-Fr/8:00-17:00 | |
| "Bell01" | |
| Default | |
| "Tune03" | |

**Tabelle 3**

| **#** Funktion | Priorität | Zähler | Ort | Zeit |
|---|---|---|---|---|
| Terminkalender | 35.7 | 34 | Office | 09:20 01.08.03 |
| | | | Office | 11:38 01.08.03 |
| | | | Home | 06:30 02.08.03 |
| | | | ... | |
| Call "A" | 12.4 | 12 | Office | 10:02 01.08.03 |
| | | | Office | 11:10 01.08.03 |
| | | | Office | 09:56 02.08.03 |
| | | | ... | |
| Call "B" | 6.0 | 12 | Home | 18:04 01.08.03 |
| | | | Home | 19:56 02.08.03 |
| | | | Home | 17:59 03.08.03 |
| | | | ... | |

## Patentansprüche

1. Mobiles Endgerät (MOT) eines Telekommunikationsnetzes, mit einer Ein/Ausgabeeinrichtung (EAE) zur Entgegennahme von Befehlen eines Benutzer und mit einer Anzahl von konfigurierbaren Parametern (A, B, ... H), die jeweils eine Betriebseigenschaft des Endgeräts betreffen,
**dadurch gekennzeichnet,**
**dass** das Endgerät Mittel (NSS, GM, CLK) zum Bestimmen von Information betreffend die aktuelle Zeit (ctm) und/oder des Aufenthaltsorts (psi) des Endgeräts aufweist, und
**dass** für zumindest einen Parameter (A, B, ..., H) eine zeitund/oder ortsabhängigen Funktionszuordnung (PRV,UPR) vorgesehen ist, welche eine veränderliche Zuordnung einer oder mehrerer Parameterwerte zu dem zumindest einen Parameter definiert, sowie eine zeit- und/oder ortsbezogene Bedingung, nach der der bzw. die Parameter mit stets höchstens einem der so zugeordneten Parameterwerten in Abhängigkeit von der Zeit und/oder dem Aufenthaltsort belegt ist.

2. Mobiles Endgerät (MOT) nach Anspruch 1,
**dadurch gekennzeichnet,**
**dass** das Endgerät Mittel (NSS, GM, CLK) zum Bestimmen von Information betreffend die aktuelle Zeit (ctm) und/oder des Aufenthaltsorts (psi) des Endgeräts aufweist, und
**dass** die konfigurierbaren Parameter (A, B, ... H) von dem Benutzer einstellbar sind und jeweils eine Betriebseigenschaft des Endgeräts betreffen, wobei für zumindest einen Parameter (A, B, ..., H) eine zeit- und/oder ortsabhängige Funktionszuordnung (PRV) vorgesehen ist, welche eine in Abhängigkeit von Befehlen des Benutzers einstellbare Zuordnung einer oder mehrerer Parameterwerte zu dem zumindest einen Parameter enthält, sowie eine zeit- und/oder ortsbezogene Bedingung, nach der der bzw. die Parameter mit stets höchstens einem der so zugeordneten Parameterwerten in Abhängigkeit von der Zeit und/oder dem Aufenthaltsort belegt ist.

3. Mobiles Endgerät (MOT) nach Anspruch 2, mit zumindest einem Eingabeelement (A, B, ..., H), das mit einer vom Benutzer wählbaren Funktion des Endgeräts belegbar ist,
**dadurch gekennzeichnet,**
**dass** das Endgerät Mittel (NSS, GM, CLK) zum Bestimmen von Information betreffend die aktuelle Zeit (ctm) und/oder des Aufenthaltsorts (psi) des Endgeräts aufweist, und
**dass** für zumindest ein Eingabeelement (A, B, ..., H) eine zeitund/oder ortsabhängige Funktionszuordnung (PRV) vorgesehen ist, welche eine in Abhängigkeit von Befehlen des Benutzers einstellbare Zuordnung einer oder mehrerer Funktionen des Endgeräts als Parameterwert(e) zu dem zumindest einen Eingabeelement enthält, sowie eine zeit- und/oder ortsbezogene Bedingung, nach der das Eingabeelement bzw. die Eingabeelemente mit stets höchstens einem der so zugeordneten Parameterwerte in Abhängigkeit von der Zeit und/oder dem Aufenthaltsort belegt ist.

4. Mobiles Endgerät nach Anspruch 3,
**gekennzeichnet durch** eine konfigurierbare Menüführung mit einer Anzahl von Eingabeelementen (A, B, ..., H) wobei in der konfigurierbaren Menüführung die zeit-und/oder ortsabhängigen Funktionszuordnung für zumindest eines der Eingabeelemente vorgesehen ist.

5. Mobiles Endgerät nach Anspruch 4,
**dadurch gekennzeichnet, dass** die konfigurierbare Menüführung einen Benutzer-konfigurierbaren Bereich (UCR), z.B. ein Untermenü, aufweist, in dem Eingabeelemente für eine zeit- und/oder ortsabhängige Funktionszuordnung vorgesehen sind.

6. Mobiles Endgerät nach einem der Ansprüche 1 bis 5,
**dadurch gekennzeichnet, dass** es dazu eingerichtet ist, zum Bestimmen der Aufenthaltsort-Information (psi) Informationen hinsichtlich der Funkzelle und/oder Basisstation des Mobilfunknetzes, in deren Einzugsbereich sich das Endgerät aufhält, abzufragen und auszuwerten.

7. Mobiles Endgerät nach einem der Ansprüche 2 bis 6,
**dadurch gekennzeichnet, dass** die zeit- und/oder ortsabhängige Funktionszuordnung in einer Tabelle (PRV) kodiert ist, die zumindest eine zeit- und/oder ortsbezogene Bedingung mit jeweils zumindest einer Zuordnung eines Parameterwertes zu einem Parameter bzw. einer Funktion zu einem Eingabeelement aufweist, wobei bei Zutreffen der Bedingung bzw. einer dieser Bedingungen die Belegung von Parameterwerten gemäß den dieser zutreffenden Bedingung zugehörenden Zuordnungen bestimmt ist. (Tabelle 1)

8. Mobiles Endgerät nach einem der Ansprüche 2 bis 6,
**dadurch gekennzeichnet, dass** zumindest einem Parameter bzw. Eingabeelement jeweils zumindest eine spezifische Vorschrift zugeordnet ist, die eine zeit- und/oder ortsbezogene Bedingung mit zumindest einem Parameterwert verknüpft. (Tabelle 2)

9. Mobiles Endgerät nach einem der Ansprüche 1 bis 8,
**dadurch gekennzeichnet, dass** die Zuordnung von Parameterwerten zu Parametern unter Verwendung von Prioritätswerten erfolgt, welche nach einer zeit- und/oder ortsbezogenen Bedingung berechnet werden.

10. Mobiles Endgerät nach Anspruch 9,
**dadurch gekennzeichnet, dass** eine Anzahl von Parametern mit jeweils jenen Parameterwerten belegt werden, für die die höchsten Prioritätswerte gemäß der zeit- und/oder ortsbezogenen Bedingung berechnet wurden.
